# EUROPEAN PATENT SPECIFICATION

(11) **EP 1 332 419 B1**
(45) Date of publication and mention of the grant of the patent: **10.03.2010**
(21) Application number: 01983089.2
(22) Date of filing: 27.09.2001
(51) Int. Cl.: G06F 3/023

(54) **METHOD AND APPARATUS FOR ACCELERATED ENTRY OF SYMBOLS ON A REDUCED KEYPAD**
VERFAHREN UND VORRICHTUNG FÜR DIE BESCHLEUNIGTE EINGABE VON SYMBOLEN AUF EINEM REDUZIERTEN TASTENFELD
PROCEDE ET APPAREIL D'ENTREE ACCELEREE DE SYMBOLES SUR UN CLAVIER REDUIT

(30) Priority: 27.09.2000 US 235722 P; 07.11.2000 US 246555 P; 20.03.2001 US 277293 P
(43) Date of publication of application: 06.08.2003
(73) Proprietor: Eatoni Ergonomics, Inc., New York, N.Y. 10016 (US)
(72) Inventor: GUTOWITZ, Howard, A., New York, NY 10010 (US); JONES, Terence, E-08003 Barcelona (ES)
(74) Representative: Patentanwälte Ruff, Wilhelm, Beier, Dauster & Partner
(86) International application number: PCT/US2001/030264
(87) International publication number: WO 2002/027432

(56) References cited:
- EP-A- 0 898 222
- WO-A-00/35091
- DE-A1- 3 235 752
- US-A- 4 447 692
- US-A- 5 818 437
- US-A- 5 847 697
- US-A- 5 880 685
- US-A- 5 950 809
- US-A- 5 952 942
- US-A- 5 953 541
- US-A- 6 005 498
- US-A- 6 043 761
- US-A- 6 130 628
- US-A1- 2001 011 271
- US-B1- 6 219 731
- US-S- D 443 615

## Description

### FIELD OF INVENTION

This invention relates to the design of typable devices, more particularly, to devices for accelerated entry of symbols with reduced keyboards.

### BACKGROUND OF THE INVENTION

A standard desktop computer keyboard contains 100 or more keys. The keyboard may be used to encode many more symbols than it has keys, including letters, capital letters, accented letters, digits, punctuation symbols, and functional symbols such as symbols to encode cursor movement, character deletion, or shortcut access to the internet. Therefore, many of the keys are typically called on to encode more than one symbol. As the number of different functions a computer keyboard needs to perform is increasing, the number of keys on a typical keyboard is increasing, leading to recent keyboards the size of platters for serving turkey.

When we turn to reduced keyboards such as telephone keypads, the constraints governing the encoding of many symbols on few keys become much more severe. When there are many symbols on a key, some means must be provided to disambiguate the symbols, that is, to decide which symbol is intended for input. There are generically three basic approaches to disambiguating multi-symbol keys:
1) chording or shifting mechanisms, in which several keys are pressed at once, the typical example being the cap-shift key which disambiguates lower and upper case letters; 2) multi-tap mechanisms in which a key is pressed sequentially a different number of times depending on which of the symbols associated to the key is intended, telephone keypads often work this way, where the 2 key, for instance, is pressed once to input an "a", twice to input a "b", and three times to input a "c"; and 3) predictive-text methods in which software is used to predict which symbol is meant. An example here is the method of Riskin US5,031,206.

Recent advances have been made to optimally combine these methods. For instance, Gutowitz US09/347,188 teaches an optimal method to combined a multi-tap mechanism and a predictive method. Gutowitz WO00/35091, teaches a method to optimally combine a shifting mechanism with a predictive mechanism.

Extension of those teachings to the input of large symbol sets comprising digits, punctuation symbols, functional symbols, accented letters and the like, introduces a number of subtle but important problems. When the number of symbols to be encoded is very large, and the number of keys is very small, additional constraints are introduced beyond those having to do with proper disambiguation. These constraints arise due to many symbols needing to be represented on a single key. In particular, on a telephone keypad with small keys, even labelling the key with all of the symbols it needs to encode may be difficult. These problems are solved by the present invention.

US 6,005,498 describes a method and a device for entering Chinese characters using a phonetic notation on a telephone keypad, wherein the device may be operated in three modes.

### OBJECTS OF THE INVENTION

It is an essential object of this invention to provide a method and apparatus for ergonomic entry of letters, punctuation symbols, digits, and functional symbols. This object is solved by the apparatus according to the invention with the features according to claim 1. Aspects of this invention further comprise:

Limited multi-tap depth. User studies show that one of the most annoying aspect of multi-tap is that some symbols may require many extra taps. For instance, the letter ôsö requires four taps in standard multi-tap. In the present invention multi-tap depth is limited since most symbols can be obtained, depending on the embodiment, either with a) a auxiliary shift key, or b) one extra keystroke. Some rare symbols may require two or more extra keystrokes.

Reduced keystrokes per symbol. As just stated, it is a desirable feature of this invention that it limits the number of keystrokes required to enter any symbol (the worst case). It is an additional object of this invention to decrease the expected number of keystrokes to enter most symbols (the average case).

Unified focus. Beginning users tend to keep their attention focused on the keypad, while more advanced users tend to keep their attention focused on the display. For the sake of usability, it is of paramount importance to avoid forcing the user to shift focus from keypad to screen and back again. In the present invention, keypad labeling provides the beginner user a way to find all or most symbols without reference to the display. Advanced users, who have learned the assignment of symbols to keys, can keep their attention focused on the display.

Discoverability. All or most symbols are visually coded in such a way that the key operations required to enter these symbols are evident from visual inspection, in a language-independent way. This coding helps the beginning user to discover, by simply scanning the keypad, how to operate the keypad.

Graduated discoverability. Symbols are organized within ordered groups according to their probability. The most probable symbols can be obtained in an easy-to-discover way, with few keystrokes. It may be more difficult to discover how to enter rarer symbols, and rarer symbols may require more laborious multiple tapping. In order to encode a large number of symbols on a limited number of keys, some symbols must require more information to specify. The advantage of the present invention is that the additional information requirement is concentrated on rare symbols, symbols which can be easily avoided by average users, and in typical circumstances.

Power. It is a given that the importance of text entry on cell phones and other handheld devices will grow, and the variety of uses to which text entry on these devices will be put will expand.The present invention provides all punctuation symbols found on a standard Qwerty keyboard. It could be used, for instance, to edit computer programs. Being both discoverable and powerful, the present invention can satisfy the needs of the full spectrum of users.

Compact presentation. By combining morphically related symbols, the present invention economizes keypad space. It allows several symbols to be presented for visual inspection in no more space than is required by a single symbol. This object is particularly important for handheld devices such as cell phones in which the keys may be very small, with very limited surface area available for labels.

Seamless integration of multi-tap and predictive text methods. In the prior art, these methods are generally presented in the alternative. However, according to the teachings of this invention, both multi-tap and predictive methods can be seamlessly integrated in a single apparatus, and thus the user can take advantage of both methods, increasing usability of text input mechanisms.

### BRIEF DESCRIPTION OF THE DRAWINGS

The invention will described in reference to a sequence of figures.
Fig. 1/8 shows the keypad of an apparatus built according to the preferred embodiment of the invention.
Fig 2/8 shows an example use of the punctuation key.
Fig. 3/8 shows an example use of the digit key.
Fig 4/8 shows an example use of the disambiguation key.
Fig. 5/8 shows an example use of the CapW key.
Fig 6/8 method for making typable devices according to the teachings of this invention.
Fig. 7/8 shows splitting of ordered groups with the addition of auxiliary keys, and an example use of the symbol advance key.
Fig. 8/8 shows a visual display for multiple ordered groups.

### SUMMARY OF THE INVENTION

The core inventive idea, whose ramifications are developed into the preferred-embodiment blueprint presented below, is that a single key can support a multiplicity of ordered groups, and that only a subset of each group needs to be visually represented on the face of a key, and that a combination of multi-tap and predictive methods can be used to input members of each of the groups, and that auxiliary keys are a convenient and effective method to select ordered groups, and to perform the multi-tap function. The objects of this invention:
limited multi-tap depth, reduced keystrokes per symbol, unified focus, discoverability, graduated discoverability, power, compact presentation, and seamless integration of multi-tap and
predictive text methods, can all be achieved by judicious application of the teachings of this invention.

Accordingly, this invention teaches an apparatus for the entry of symbols comprising a multiplicity of keys wherein at least one of said keys is effective to input a multiplicity of ordered groups of symbols, wherein at least two of said ordered groups of symbols input by said at least one key comprise at least two symbols, and further comprising an iterator mechanism and predictive mechanism to select members of the ordered groups for input.

### DETAILED SPECIFICATION

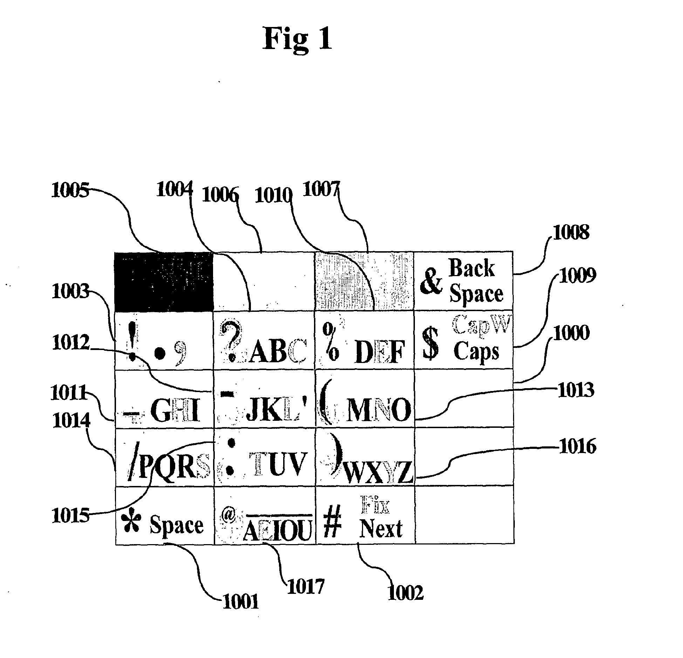

The invention is first described in reference to Fig. 1. Fig. 1 shows an apparatus 1000 for the entry of letters, including accented letters, as well as punctuation, digits, and various functional symbols. The apparatus comprises a plurality of keys. Some of the keys, such as 1001, are used for inputting only punctuation, in this case the * symbol, and the space symbol. Other keys, such as 1002 are used to input symbols and to perform functions, in this case, the # symbols, and the fix and next functions. These functions will be described below. Other keys are for the entry of peculation symbols and digits, such as 1003 which is for the entry of the digit 1 and the punctuation symbols! (exclamation point), (comma) and. (period). Still others, such as 1016, are for the entry of digits, punctuation symbols, and letters, in this case the digit 9, the symbol ) (right parenthesis) and the letters w,x,y, and z. In accordance with the teachings of this invention, one of the keys 1005 is an auxiliary key, which is electronically coupled to at least some of the keys which input punctuation symbols (e..g. 1001-1004) such that when the auxiliary key is actuated in conjunction with keys which input inter alia punctuation symbols, then one of the punctuation symbols from the key is input. This first auxiliary key, depending on the implementation, could be actuated before, after, or during the activation of the corresponding punctuation key. In a preferred arrangement, the first auxiliary key functions like a shift key. That is, while it is actuated ("held down" in the case of mechanical keys) all punctuation keys which are also actuated ("pressed" in the case of mechanical keys) will input one of the punctuation symbols to which they are associated. An apparatus built in accordance with the teachings of this invention may comprise a second auxiliary key 1006 which when actuated in conjunction with one of the keys which inputs digits inter alia (e.g. 1003 or 1004), serves to select one of the digits associated to the digit key for input. The second auxiliary key, like the first auxiliary key, can be actuated before, after, or during the activation of the corresponding digit key in order to have its effect of selecting one of the digits for input.

An apparatus built in accordance with the teachings of this invention may further comprise a third auxiliary key 1007 which when operated in conjunction with one of the keys which encodes inter alia letters (such as 1004) serves to select one or more of the letters associated to the letter key. In the apparatus depicted in Fig. 1, the letters selected are the letters CEHLNSTY, this selection is according to the invention disclosed in Gutowitz PCT/US99/29,343.

### Operation of the First Auxiliary Key (Punctuation Key)

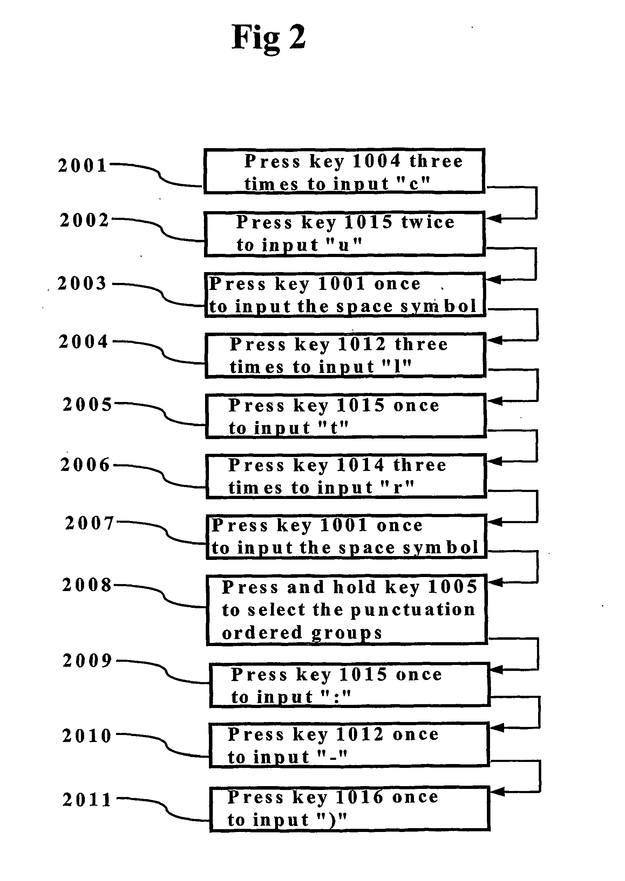

The first auxiliary key 1005 is used to input punctuation symbols. Its operation will be described in reference to Fig. 2. Fig 2 describes the entry of a phrase, ôcu ltr :-)ö when the first auxiliary key is used in conjunction with a multi-tap mechanism for entering letters. In the present example, the first auxiliary key is embodied as a shift key, which is the preferred embodiment. That is, the auxiliary key can be held down, and as long as it is held down it produces the effect of selecting a punctuation symbol to be selected from a key encoding punctuation symbols. Alternate methods to embody the auxiliary key include a) the auxiliary key is pressed and released: it takes effect on the next key pressed, b) the auxiliary key is pressed after the punctuation key and has effect on the key previously pressed, c) the auxiliary key is a mode-lock key: once pressed, in remains in effect for all subsequent punctuation key presses, until the auxiliary key is pressed again, d) the auxiliary key is represented by a length of key pressing, for instance, if a letter and punctuation key is pressed rapidly, then a letter is input, while if it is pressed and held down then a punctuation symbol is entered. Further means to embody a first auxiliary key according to the teachings of this invention will be evident to those skilled in the art. The same is true of other auxiliary keys to be introduced below. The essential feature of this aspect of the invention is that the first auxiliary key serves to select a punctuation symbol from the plurality of symbols, potentially including letter symbols, encoded by the letter and punctuation keys.

For the flow chart of Fig. 2, the association of symbols with keys as shown in Fig 1. is assumed, that is, one key encodes the letters abc, and the punctuation symbol ?, etc. This particular association of symbols to keys will be discussed extensively below, it contains many inventive features for which patent rights will be herein claimed.

Thus, in the first step 2001 of Fig. 2, key 1004 is pressed three times to enter the letter "c", then (step 2002) key 1015 is pressed twice to enter the letter "u", and so on until the "r" is entered (step 2006), then the first auxiliary key 1005 in step 2008 is pressed and held down while keys 1015, 1012, and 1016 are pressed in succession (in steps 2009-2011) to produce the emoticon :-).

### Operation of the Second Auxiliary Key (Digit Key)

An apparatus built according to the teachings of this invention may further comprise a second auxiliary key. If at least one of the plurality of symbol keys of the invention are used for inputting letters and digits, then the second auxiliary key operates such that when the second auxiliary key is actuated in conjunction with one of the letter and digit keys then at least one of the encoded digits is input, and when one of said letter and digit keys is actuated not in conjunction with said second auxiliary keys or any other of said keys for inputting symbols than at least one of said letters encoded by said one of said letter and digit keys is input.

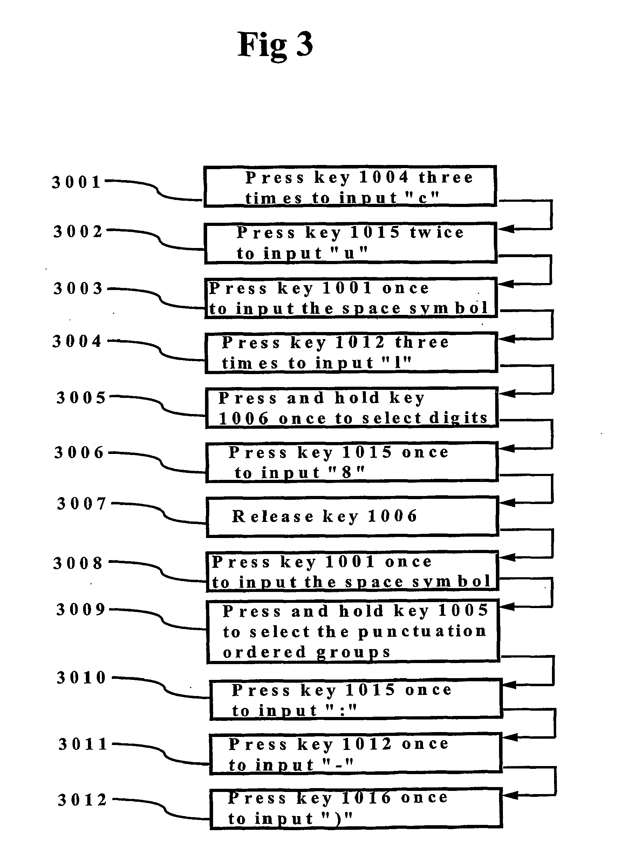

In other words, the present invention also provides for a second auxiliary key to be used for inputting digits. Its function is similar to the first auxiliary key, except that while the first auxiliary key selects a punctuation symbol from a letter an punctuation key, the second auxiliary key selects a digit from a key encoding digits and potentially other symbols. Thus, for example, if the phrase to be entered were "cu 18r :-)" it could be input as shown in Fig. 3. Steps 3001-3004 of Fig. 3 are identical to steps 2001-2004 of Fig. 2, and serve to enter "cu 1", in step 3005, the second auxiliary key 1006 is actuated such that when key 1015 is actuated in step 3006, the digit 8 is entered. In step 3007, the second auxiliary key 1006 is released. Then, in steps 3008-3012, a space is entered, as well as the symbol sequence :-), just as in the case described in Fig. 2.

### Operation of the Third Auxiliary Key (Disambiguation Key)

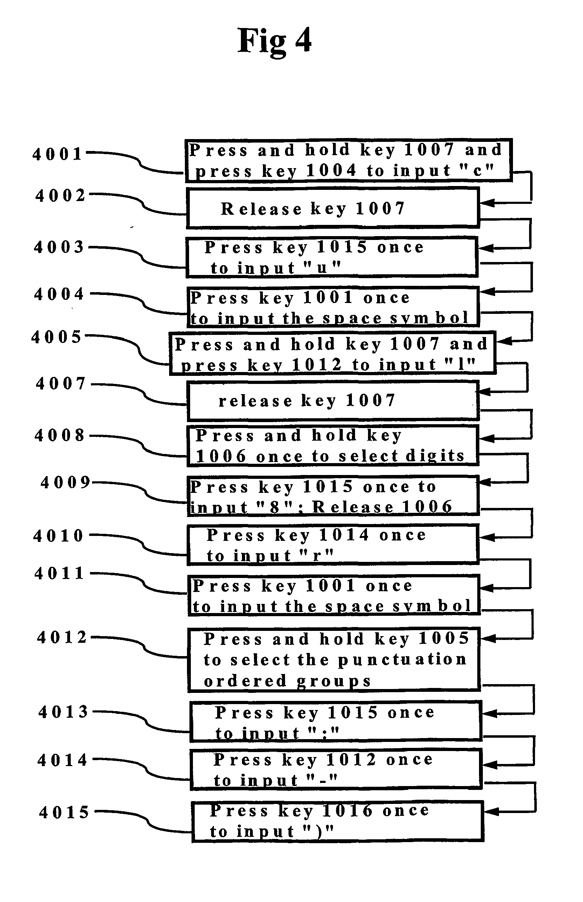

Some embodiments of the present invention may provide a third auxiliary key whose purpose is to select certain letters for input. The selection of the letters to be input may be done according to the invention disclosed in Gutowitz '343, but, according to the present invention, may be chosen according to any scheme. For the purposes of illustration, we will use the scheme of Gutowitz '343, in which the letters CEHLNSTY are selected from the keys 2-9 respectively. In the invention disclosed in Gutowitz '343, the other letters are selected by predictive software. Thus, returning to the example phrase "cu 18r :-)", and referring to Fig. 4, we see that the phrase can be entered with the help of the first, second, and third auxiliary keys as follows: In step 4001, the third auxiliary key 1007 is actuated, along with the key 1004. This inputs the letter "c". In step 4002, the third auxiliary key 1007 is released, and then in step 4003 key 1015 is actuated. Thanks to the predictive software, activation of key 1015 inputs the letter "u". Then, in step 4004, key 1001 is actuated to input a space. Actuation of key 1007 in conjunction with key 1012 inputs "1" in step 4005. Key 1007 is then released in step 4007. Actuation of the second auxiliary key 1006 in conjunction with key 1015 inputs the digit 8 (steps 4008 and 4009). Then, in step 4010, key 1014 is actuated upon which, thanks to the predictive software, the letter "r" is entered. In steps 4012 through 4015, the sequence " :-)" is entered, as in Fig. 3.

### Operation of the Fourth Auxiliary Key (Capitalization Key)

The fourth auxiliary key 1009 is used to input capital letters. As in the case of the first, second, and third auxiliary keys, the fourth auxiliary key is operated in conjunction with other keys in order to perform an input action. As in the case of these other auxiliary keys, the fourth auxiliary key might be actuated before, after, or during the activation of said other key in order to perform the required action. In a preferred arrangement, the fourth auxiliary key is actuated after the other key in order to perform the action of capitalization. Thus, if it is desired to input the capital letter ôCö, and an embodiment comprising a third auxiliary key is used as described in Fig. 4, then the third auxiliary key 1007 would be actuated in conjunction with key 1004 to input "c", then the fourth auxiliary key 1009 would be actuated in change the lower-case "c" to an upper-case "C". The advantage of this arrangement is that it permits a novel and unobvious ergonomic extension of the capitalization action. Thus, the present invention provides for a new action, the "CapW" (Capitalize Word) action. The CapW action is obtained when some other auxiliary key is operated in conjunction with the capitalization key 1009. Preferably, said other auxiliary key is the disambiguation key 1007, if present. This preference arises from the observation that capitalization is only relevant for letters, not digits or punctuation symbols, so it is natural to associate a capitalization action with another key acting to input letters. Capitalization needs may arise in several ways, for instance, the first letter of a word may need to be capitalized if the word is a proper noun: Fred. Or, the word may need to be entirely capitalized, if it is an acronym: FRED. Other patterns of capitalization, such as every other letter capitalized, might be required in other circumstances: DoCoMo. The CapW key provides the ability to supply at least one capitalization pattern. Once the patterns are defined, repeated activation of the CapW key scrolls through the available patterns.

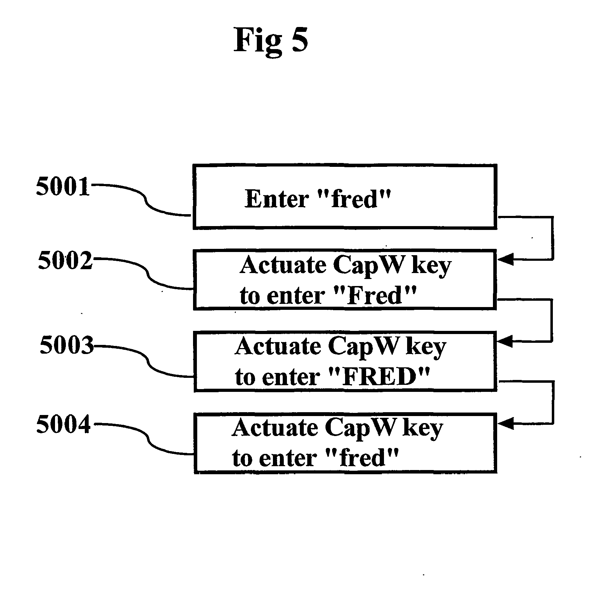

For instance, assume that three patterns are defined, capitalize first letter, capitalize all letters, and uncapitalize all letters. Then, referring to Fig. 5, we disclose the steps to be taken to enter the capitalized letter sequence FRED. In step 5001, "fred" is entered. This entry could be by any means, multi-tap, predictive, or other. Then, in step 5002, the CapW key 1009 is actuated. This activation is preferably by operation of key 1007 substantially simultaneously with key 1009. This first activation of the CapW key after the sequence "fred" is entered produces the sequence "Fred". A second activation of the CapW key in step 5003 applies the second capitalization pattern to produce the sequence "FRED". If the user then decides to cancel all capitalization, a third consecutive activation of the CapW key will return the input to the uncapitalized word "fred".

### Operation of the Fifth Auxiliary Key(Symbol Advance Key

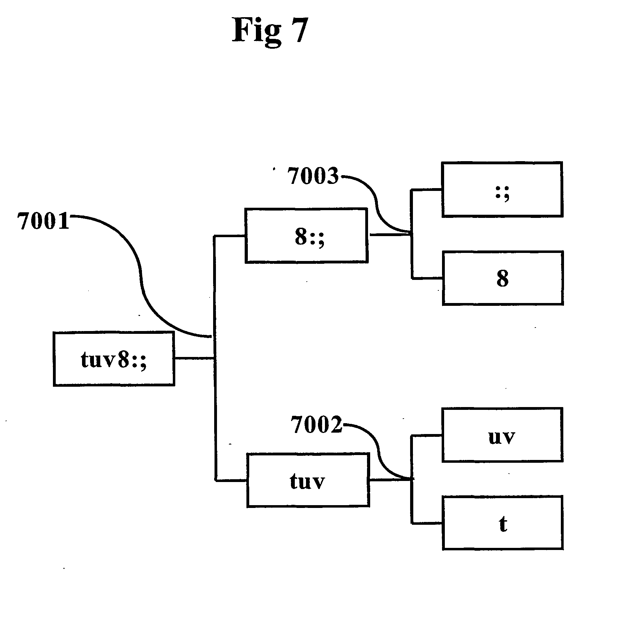

The symbol advance key, or "next" key 1002, provides the action of selecting symbols by advancing in an order defined on a group of symbols. That is, if symbols a1,a2, ..., an are arranged in an ordered group, then a2 follows a1, a3 follows a2, and so on. Typically, an ordered group will have a circular order, so that a1 follows an. An ordered group may include all of the symbols on a key, or only a subset of the symbols on a key. The collection of symbols into ordered groups is an important design decision in the construction of reduced keyboards. For instance, consider the case of key 1015. This key encodes three letters t,u, and v, a digit, 8, and a punctuation symbol colon (:). It might also encode other symbols, such as the semi-colon symbol (;), which are not displayed on the face of the key. These symbols could all be placed in a single order, for instance tuv8:;, or in ordered groups, such as all letters in one group, and all digits and punctuation in a second group. According to the teachings of this invention, the division of symbols into groups is governed by the presence and type of auxiliary keys. For instance, an apparatus which provides only a punctuation key should provide symbols divided into two groups. One group contains symbols input when the punctuation key is actuated, and the other contains symbols which are input when the punctuation key is not actuated. Thus, in this example, the symbols t,u, and v could be in one ordered group, and the symbols 8:; could be in another ordered group. Referring now to Fig. 7, we see that at step 7001, a punctuation key has been added to the apparatus, dividing the ordered group into two ordered groups as just described. If a disambiguation key is also present, and the disambiguation key serves to select the letter t, then the groups should be: (t)(uv)(8:;). The splitting effect of the addition of the disambiguation key is shown at step 7002. Finally, if a digit key is also provided, then the groups should be (t)(uv)(8)(:;). The splitting effect of the digit key is shown at step 7003. The effect of this aspect of the invention is that the addition of each auxiliary key reduces the size of the ordered groups, limiting the multi-tap depth, a desirable advantage of this invention. Fig 7 also explains the effect of the symbol advance key. Before ordered group splitting at step 7001, the symbol advance key inputs the symbols tuv8:; in order, as the symbol advance key is actuated multiple times in succession. Then, after the ordered group split due to the punctuation key, the symbol advance key inputs either the symbols tuv in order, or the symbols 8:; in order depending on whether the punctuation key has not or has been actuated, respectively.

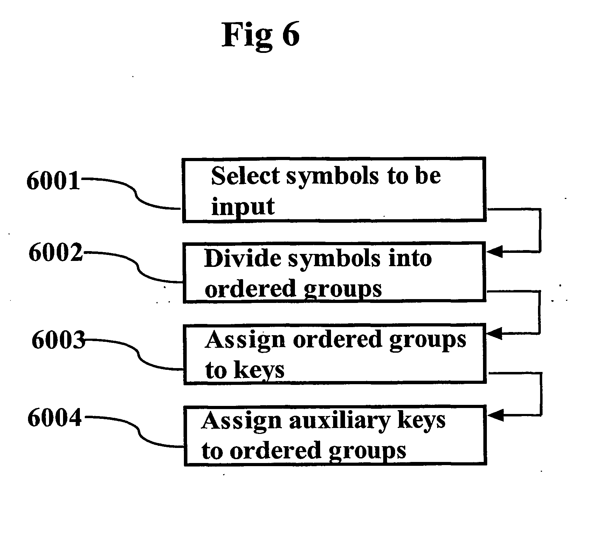

Thus, referring to Fig. 6 a method for generating typable devices according to the teachings of this invention comprises the steps of :
6001 selecting a plurality of symbols to be input,
6002 assigning a plurality of said plurality of symbols to ordered groups,
6003 assigning said ordered groups to keys such that at least one key is assigned more than one ordered group, and such that each key is effective to input members of said assigned ordered groups.
   If the typable device has at least one auxiliary key then some of the ordered groups can be associated to the auxiliary key or keys, so that the method can further comprise step, and
6004 assigning one or more of said assigned ordered groups to an auxiliary key engaged with said keys assigned ordered groups such that when said auxiliary key is actuated in conjunction with said keys assigned ordered groups then one of said assigned ordered groups is selected preferentially for input.

### Integration of Predictive Mechanisms

It is a desirable feature of this invention to limit the number of keystrokes required to enter any symbol (the worst case), and to decrease the expected number of keystrokes to enter most symbols (the average case). Each additional auxiliary key helps further reduce the worst-case number of keystrokes, whether the symbol advance is accomplished by multiple pressing of a key, or, preferably using an auxiliary symbol advance key. It is evident to one skilled in the art that the process of adding additional auxiliary keys could be carried to the extreme in which every symbol is entered unambiguously using a symbol key in conjunction with an auxiliary key. The problem with this is that in the case of reduced keyboards, the number of keys which can be incorporated is highly limited. In most cases, ordered groupings will contain more than one symbol. If there are statistical regularities in the occurrences of symbols within an ordered group, then software can be designed to predict which symbol should preferentially occur in any given context. Examples of such software have been previously cited. In every case, the function of the software is to change the ordering within an ordered group. Thus, in the case of the key 1015, predictive software might determine that the ordered group (uv) should be ordered (vu) in certain circumstances. For example, if the letters "wea" had been previously entered, then "v" is more likely intended when the key 1015 is pressed, since "weave" is a word in English, but no word begins "weau". Similarly, for the punctuation ordered group (:;) there may be contexts in which a semi-colon is more likely than a colon, and thus, in that context, semi-colon should be first in the ordering. As an example, it could be that the emoticon ;-) is more common than the emoticon :-). If so, predictive software may determine that when it encounters an activation of the key 1015 with the punctuation key actuated, and followed by activations of keys 1012 and 1016 with the punctuation key actuated, then semi-colon should be input rather than colon. This will input the emoticon ;-), which, in this example, was probably intended by the user.

Thus, the present invention allows for either a multi-tap method or, equivalently, a symbol advance key, or a predictive system, or all of the above to be used to select symbols within an ordered group. It is, indeed, a unique feature of this invention to allow both a multi-tap method and a predictive method to co-exist seamlessly within a single apparatus.

Returning to the example phrase "cu 8r :-)", and referring now to Fig. 6, we see that the phrase can be entered with the help of the first, second, and third auxiliary keys as follows, using either using a symbol advance key or predictive software: In step 6001, the third auxiliary key 1007 is actuated, and the key 1004 is actuated as well. This inputs the letter "c". In step 6002, the third auxiliary key 1007 is released, and in step 6003 key 1015 is actuated. In this example, we will assume that 1) in the present context the ordered group input by the 1015 key is (vu), and 2) predictive software is provided such that when a space is entered directly after the key 1015 is actuated, then v is changed into a u. Then, in step 6003, a v will be input, but, when space is entered in step 6004, using the 1001 key, the v will be changed into a u. If desired by the user, a u could also be obtained by substitution of an alternate step 6004(alt), in which the symbol advance key 1002 is actuated to change the v into a u before proceeding to enter a space. In either case, the phrase can be completed in the same way as disclosed in Fig. 4.
This seamless integration of multi-tap and predictive methods has the advantage that the user can decide, at any given moment, to trust the predictive system to produce the desired result once sufficient context has been provided, or take direct control of the input using the symbol advance key, or its multi-tap equivalent action.

### Basic Punctuation Symbol Set

As previously recited, it is an important aspect of the present invention to reduce the average-case number of keystrokes required to input symbols. In the case of input of punctuation, it is important, therefore, to distribute the punctuation symbols over the keys in such a way that the most-common symbols can be entered with the fewest keystrokes. By statistical analysis it has been determined that some of the most common symbols are space ( ), period(.), comma(,), apostrophe('), exclamation point(!), question mark(?), underscore (_), hyphen (-), left parenthesis ((), right parenthesis ()), colon(:), at sign (@), slash (/), percent (%), star (*) and pound (#). All of these common symbols can be provided on a standard telephone key pad augmented with a punctuation key and a disambiguation key in such a way that each takes only one keystroke to enter. This symbols will be referred to as the basic symbol set. Though the basic symbol set was determined through statistical analysis, and is our preferred embodiment of this symbol set, it is evident to one skilled in the art that one or more of the symbols could be substituted for other symbols without escaping the scope of this invention. The essential feature of the basis symbol set is that they are most common punctuation symbols. The basic punctuation symbol set is sufficient to provide enough punctuation to support short messaging applications, as well as the entry of email addresses and most URLs . A secondary symbol set can be defined including the symbols tab, &, $,;, {,},[,],∼,',",|,\, and so on. Input of symbols in the secondary symbol set will be discussed below.

### Preferred association of the elements of the basic symbol set

### with the keys of a standard telephone keypad

In the application of the present invention to improvement of the standard telephone keypad, implementation decisions must be made as to 1) which symbols to associate to which keys, and 2) in the case in which a given key has more than one ordered group, which group to include the symbol in. The present teachings allow for a wide variety of choices. In view of our presently available information, the following choices are optimal.

Period , comma and space. These very common symbols occur with greater frequency than many letters do. In a preferred embodiment, space is placed on the 1001 key and period on the 1003 key. To enter this symbols, no associated activation of an auxiliary key is required. Comma is also placed on the 1003 key. In the case that no disambiguation key is present, comma is in an ordered group with period, that is, the ordered group comprising (.,). In the case that a disambiguation key is present, comma is in its own ordered group, and selected using the disamiguation key.

Star and pound. The placement of these symbols is dictated by ISO convention. In the preferred embodiment of this invention, they are associated with the 1001 and the 1002 key respectively.

Apostrophe. In English, The apostrophe is a punctuation symbol with particularly strong statistical correlations with letters. This property allows predictive software to do a good job on predicting its occurrence in symbol strings. Thus, it can be included in an ordered group comprising letters. In a preferred embodiment, it is placed on the 1012 key, in the ordered grouping comprising letters on that key. In other languages, other punctuation symbols may be subject to the same treatment.

The Ten Numeric-like punctuation symbols. There are 10 common punctuation symbols which can be put into a close one-to-one correspondence with the digits. This correspondence is based on morphic similarity of the symbols in common fonts. That is, exclamation point(!) is similar in form to the digit 1, question mark(?) is similar in form to the digit 2, % is similar in form to the digit 3, underscore (_) is similar in form to part of the digit 4., hyphen (-) is similar in form to part of the digit 5, left parenthesis (() is similar in form to part of the digit 6, slash (/) is similar in form to part of the digit 7, colon(:) is similar in form to part of the digit 8, right parenthesis ()) is similar in form to part of the digit 9, and the at sign (@) is similar in form to the digit 0. The standard telephone keypad places the digits 1-9, and 0 on the keys 1003, 1004, 1010-1017 respectively. Thus, according to the association determined by the preferred embodiment of this invention, the punctuation symbols !?%_-(/:)@ are associated with the keys 1003, 1004, 1010-1017 respectively.

### Morphic Overlap

One of the surprising and highly useful features of the just described association of punctuation symbols to digits is that the morphic similarity allows punctuation symbols and digits to occupy substantially the same keypad surface real estate. By superimposing each digit with its associated punctuation symbol, very small keys can be labeled in such a way as to make both the digits and the punctuation symbols visible. The visually marked presence of all symbols which may be entered allows beginning users to scan the keys to find either their desired digit or punctuation symbol. Further, it increases ease of learning, since the morphic similarity helps the user remember which key is associated with which symbols. By proper coloring, lighting, font design, and other visual means, both digit and punctuation symbol can be made clearly visually distinct, even though they are overlapped. Though this invention does not require punctuation symbols to be overlapped with associated digits, it teaches how to do so if desired. Association of the digits with the punctuation symbols increases discoverability of the keypad, as does proper use of visual cues. In a preferred embodiment of this invention, the color of the digit labels is the same as the color of the digit key, the color of the punctuation symbol labels is the same as the color of the punctuation key, and the color of the labels of unambiguous letters selected by the disambiguation key is the same the color of the disambiguation key itself.

### The Secondary Symbol Set

Thus far, we have placed 15 punctuation symbols in a preferred arrangement on the telephone keypad. However, the standard desktop keyboard may encode 32 or more punctuation symbols. Continuing the application of the morphic similarity aspect of the teachings of this invention, most of these can be conveniently associated to keys on the telephone keypad in a way which maintains discoverability, reduced worst-case keystroke number, and reduced average case keystroke number. The placement of these secondary symbols provides graduated discoverability. Once the user has discovered how the primary symbols are associated to the digits through morphic similarity, they can accurately guess where other symbols are placed, even if there is no visual marker of the association of these secondary symbols with keys. For example, once the principle of morphic similarity has been discovered, it can be guessed that the semi-colon (:) should be associated to the key 1015, which is labeled with a colon (:). If the semi-colon is placed an ordered group with colon (:;) then the user, once he or she has understood that the symbol advance key works to advance in the symbol order, will understand that to obtain a semi-colon, the punctuation key 1005 must be actuated in conjunction with the 1015 key, and then the symbol advance key 1002 must be actuated. This is the essence of discoverability:
allowing the user to extend experience gained from operation of one aspect of the mechanism to operation of other aspects of the invention.

In the same way, the pipe symbol (|) can be placed in an ordered group with the exclamation point (!), the back-slash (\) placed in an ordered group with slash (/), and so on to form the groups (([{"<),()]">), (-=+), (") (which group may additionally contain letters), and (∼^). These latter associations are not as morphically strong as the previous associations described, and they also contain less frequently used symbols. Thus, a keypad designer has some freedom to chose the location of the symbols, and may even chose to leave these symbols out entirely. On keypads which include keys beyond the 12 keys of the standard keypad, some of the keys may be used to encode more common secondary symbols. For instance, in the embodiment of Fig. 1, the & symbol is associated with the back-space functional symbol on key 1008, and the $ symbol is associated with the Caps/CapW functional symbols on key 1009.

### Functional Morphology

Some punctuation and functional symbols, such as tab or backspace, have no morphic representation, and morphic similarity is not a placement guide. Thus placement of these symbols requires an abstraction of morphic similarity. Thus space, newline, backspace, and tab bear some family resemblance in that each serves to manipulate the location of the next symbol to be input. Given this teaching of association of symbols by functional morphology, various schemes may be employed to embody associations according to these teachings. A preferred choice in the application of these methods to telephone keypads is to associate newline with multiple space symbols. Thus, when the ôspace keyö 1001 is pressed once, the space symbol is entered, and when it is pressed twice in succession, a space and then a newline is entered. Each additional successive press of key 1001 produces additional newlines. An alternative embodiment might, for instance, have one press input the space symbol, two presses input a tab symbol, and each subsequent press input a tab symbol.

Auxiliary keys, when present, can also be used to distinguish members of a family bound by functional morphologic similarity. For instance, a digit key actuated in conjunction with a space key could represent a tab symbol, in as much as a tab is a multiple of a space. Thus, in a preferred embodiment of this invention, the digit key 1006 actuated in conjunction with the space key 1001 produces the tab functional symbol. If another auxiliary key is present, such as the disambiguation key 1007, it could be actuated in conjunction with the space key to produce a backspace. This is not the mechanism chosen in the preferred embodiment shown in Fig. 1. There, a separate key, 1008, is used to input backspace. This illustrates an alternate mechanism to encode backspace, preferred for its discoverability. However, design constraints may not allow a key to be devoted to this purpose, and if they do not, the key 1007-1001 combination for inputting backspace is preferred.

### Predictive Punctuation

It has already been pointed out that punctuation symbols may have sufficient statistical correlation with other symbols, such as letters, to allow predictive mechanisms to operate to reduce the expected number of keystrokes in a non-trivial way. The preferred embodiment of this invention disclosed herein has an aspect which lends itself to the predictive approach to the entry of punctuation symbols. In the preferred embodiment, punctuation symbols which are mophologically similar to the left parenthesis symbol: (ææ[{ and < are in turn associated to the digit 6, and symbols morphologically similar to the right parenthesis symbol )ö]} and > are associated in turn to the digit 9. Left-parenthesis-like symbols have a functional-morphological relationship with right parenthesis like symbols in that left-parenthesis-like symbols often occur in matching pairs with right-parenthesis-like symbols. This pair-matching property can be used to reduce the expected number of keystrokes required to enter these symbols. Consider entry of the sentence: <so then (after) we'll "go">. If the ordered punctuation group on the 6 key is ("[{<, and the ordered group on the 9 key is )"]}>, then using a symbol advance key to enter the parenthesis-like symbols would require: five keystrokes to enter <, one keystroke to enter (, one keystroke to enter ), two keystrokes to enter ", two keystrokes to enter ", and five keystrokes to enter >, for a total of 16 keystrokes. However, according to the teachings of this invention the order of the right parenthesis-like symbols can be set as a function of the left-parenthesis-like symbols in such a way as to reduce the number of keystrokes. A simple rule which accomplishes this is: the first symbol in the right-parenthesis-like ordered group should match the last-entered unmatched symbol in the left-parenthesis-like group. Applying this rule we have: five keystrokes to enter <, one keystroke to enter (, one keystroke to enter ) (right parenthesis matches left parenthesis, the last entered unmatched left-parenthesis-like symbol. This left-parenthesis-like symbol is now matched, and the last-entered unmatched left-parenthesis-like symbol is now <), two keystrokes to enter " (which becomes the new last-entered left-parenthesis-like symbol), one keystrokes to enter "(this now matches "), and one keystrokes to enter > (matching the remaining unmatched left-parenthesis-like symbol <), for a total of 11 keystrokes. Thus, in this example, the average number of keystrokes per parenthesis-like symbol has dropped from nearly 3 to less than 2, even though the worst-case remains 5 keystrokes per symbol. Even though the parenthesis-like ordered groups of symbols are large compared to other ordered groups, thanks to the pairing property of these symbols, the expected number of keystrokes can be kept small on these ordered groups.

### Treatment of accented letters

The preferred embodiment of this invention extends the property of graduated discoverability to the treatment of accented letters. Many languages contain letters with accents, and any given letter may occur with many accents, depending on the language. Further depending on the language, consonants and/or vowels may be accented. While languages based on the roman alphabet can generally be read in the absence of accents, inclusion of accents increases the comfort of the native speaker of the language with the text being entered. Provision of mechanisms to enter accented letters on a reduced keyboard is thus highly desirable, and it further desired to make entry of these accented letters as easy as possible.

Predictive mechanisms can be employed to reduce the number of keystrokes required to enter accented letters, even when there are many accented letters, each accepting many accents. As in the treatment of digits, punctuation symbols and unaccented letters, the over-riding concerns for the machines built according to the teachings of this invention are reduction in keystroke number (an aspect of ease-of-use), and discoverability (an aspect of ease of learning). Discoverability is increased when familiar letter categories are used to help assign letters to keys. The method taught by the preferred embodiment of this invention for treating accented letters is to place accented consonants on the same key as their unaccented counterparts, and to place accented vowels together all on the same key, or on a few keys distinct from those keys which are used to input the unaccented vowels. Extensive numerical studies performed by the inventors show that this placement is not only easy to learn, it also is near optimal for reducing the number of keystrokes required to enter accented letters when predictive mechanisms are use to select accented letters for input priority.When applying these ideas to telephone keypads, it must be borne in mind that only a small number of symbols can be displayed on the surface of any key. In general, for most western european languages, the frequency of accented vowels is greater than the frequency of accented consonants. Therefore, in the treatment of these languages, it is preferable to represent the accented vowels on the key surface, but suppress the representation of accented consonants. In the preferred embodiment of this invention, key 1017 is used to input all accented vowels. It is to be noted that placing all accented vowels on a single key could result in quite large ordered groups. For example, for some languages, the ordered group might include e'e'e^ a'a'a^, etc. (here the accent mark is written after the letter to which it applies). In these cases, it may be impossible to represent all of the accented letters on the face of a small key in such a way that they are visible to the unaided human eye. To alleviate this problem, an abstract form representing the plurality of available accents is preferred to concrete and detailed markings representing the individual accented letters. In Fig 1. this abstract form is an overbar over all of the vowels, though other arrangements will be evident to one skilled in the art.

It is further disclosed that both the placement of the accented letters and the abstract form representing accents can be integrated according to the teachings of this invention with the action of the disambiguation key such that the action of the disambiguation key on accented letters, if any, is easily discoverable. In Fig 1. it is revealed that the portion of the overbar which is over the letter e is visually distinct from the other portions of the overbar, and that the e itself shares a visual character (color, shading, font or other visual cue) relating it to the overbar, and to the disambiguation key. This visual relation system guides the user to understand that the disambiguation key should be actuated in conjunction with the 1017 key in order to input any accented e.

### Visual Display as an Aid to Discovery

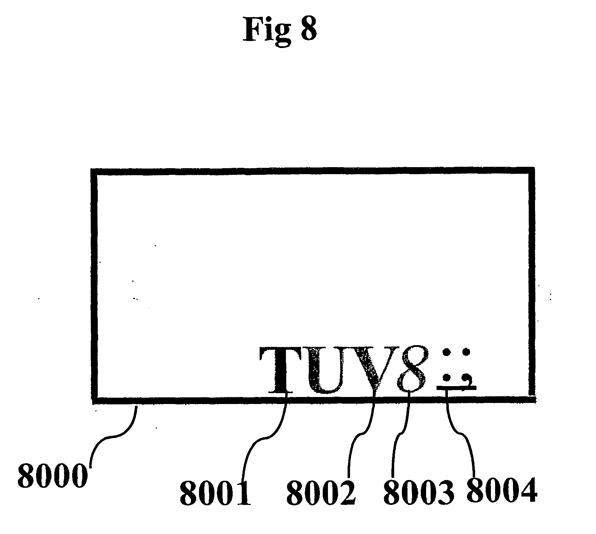

On phones with visual display screens it is possible to further guide the user to discover the keystroke combinations required to enter any symbol, even those which do not appear as explicit labels on the keypad. Recall that the symbols on a key are arranged in one or more ordered groups. The number of ordered groups is a function of the number of auxiliary keys which can operate in conjunction with the symbol key. Typically one of the ordered groups is the ordered group which is operative when the symbol key is pressed non-conjointly with some auxiliary key. In the preferred embodiment of this invention, as revealed in Fig. 1, key 1015 encodes the following four ordered groups (8)(:;)(t)(uv). The groups are selected by the digit key, the punctuation key, the disambiguation key, and no auxiliary key respectively. A beginning user may not understand how to use the auxiliary keys, and if an apparatus is fully discoverable, then the user will be guided to the correct actions without the need of verbal or written instruction. Imagine now that the digit key is a given color (say blue) and the digits on the symbol keys are also blue, the punctuation key is green and the punctuation symbols on the symbol keys are also green, the disambiguation key is red, and the disambiguated letters are also red, and that letters which are not affected by the disambiguation key are also black. Then, when a beginning user presses key 1015 they will see a display in which different ordered groups are displayed in different colors. The different colors displayed for the different groups provides the user with an indication as to 1) which auxiliary key to press to obtain the desired symbol, and 2) helps the user identify the symbols which are not explicitly labeled on the keys themselves. It will be evident to one skilled in the art that other visual cues such as shading or font style could be used instead of color to mark the ordered groups and their associated auxiliary keys. Indeed, referring now to Fig. 8, we see a visual display 8000 which has one ordered group 8001, containing "t" labeled in black, a second ordered group 8002, containing "uv" labeled in gray, a third ordered group 8003, containing the digit 8, in gray italic, and a final ordered group 8004 containing the punctuation symbols colon and semi-colon, labeled with an underline.

### The Fix Key

The fix key functionality is specific to embodiments which incorporate a particular type of predictive text mechanism. If the predictive text mechanism is such that the display and input of symbols may be revised in light of subsequently entered information, then means to block or undo these retroactive changes may be desirable. The fix key supplies these means. Whenever it is activated, the last retroactive change is undone. The fix key is designed to simplify the typing of non-words. A mode in which the predictive software can perform retroactive changes will be called automatic mode, and a mode in which retroactive changes cannot occur will be called manual mode. Beginning users may enter manual mode (by tapping next in automatic mode) whenever they encounter a word, such as a URL, not likely to be in a dictionary or reference list of words. While this is the safest approach to entering non-words, it may also throw away some of the power of automatic mode. Automatic mode may be capable of correctly entering many non-words, and require no extra taps per letter to do so, whereas manual mode may require a few extra taps on these words. The more sophisticated approach to entering non-words is to begin typing them in automatic mode, and only enter manual mode if something goes astray. Automatic mode will have gone astray if it retroactively changes letters which were correct before the retroactive change. When that happens, the user can press the fix key to 1) cancel the retroactive change, and 2) enter manual mode. An example where this might occur is when the user wishes to type a name in English of non-English origin, such as "Quader". When this word is input in automatic mode, the first 4 letters "quad" may appear correctly. However, upon pressing the "e" key, the display may changes to "pubde". At this point, the user can press the fix key to obtain "quade", and then complete the word in manual mode to obtain "quader".

### Integration of Symbol Advance and Predictive Text Mechanisms

It has been revealed that the present invention allows for members of an ordered group to be selected either using the symbol advance key or predictive text mechanisms or both. It has also been revealed that a fix key can aid in a particular integration of predictive and multi-tap (or symbol-advance-key) mechansims. In general, a good predictive text mechanism can be relied on to correctly enter sequences of letters which are common in a language. However, some sequences, such as URLs or email addresses may be beyond the predictive power of the algorithm. If the user desires to enter such a sequence, they may be required to wrest control from the predictive mechanism to enter the sequence using the potentially more laborious, but more certain method afforded by the symbol advance key (or, equivalently, a multi-tap method). According to the teachings of this aspect of this invention, when, in the course of entering a sequence of letters bounded by punctuation, a user activates the symbol advance key then for the remainder of the sequence, until the next punctuation symbol, the predictive mechanism will be prevented from making retroactive changes to the letter sequence being entered. The non-obvious reason for this restriction is that when the user activates the symbol advance key they are manifesting a desire to more closely control the behavior of the text-entry mechanism, and to not leave decisions as to which letter to display to predictive software. The situation is similar to a driver of an automatic-shift car moving into manual-shift mode when driving on a slippery patch of road. When a punctuation symbol (typically a space symbol) is entered, this signals that the user has completed the difficult or unusual sequence, and full operation of the predictive software is restored.

In conclusion, it is noted that many modifications to the embodiments discussed in this specification will be evident to one skilled in the art, the full scope of this invention can only be appreciated in reference to the attached claims.

## Claims

1. An apparatus (1000) for the entry of symbols
comprising a multiplicity of keys (1001, 1002, 1003, ...),
wherein at least one of said keys is a multiple-ordered-group key (1003, 1004, 1010, 1011, ..., 1017) to which a multiplicity of ordered groups of symbols ("(8)", "(.;)", "(t)","(uv)") is assigned, said multiple-ordered-group key (1003, 1004, 1010, 1011, ..., 1017) being effective to input a selected member of a selected group of said multiplicity of ordered groups of symbols ("(8)", "(.;)", "(t)","(uv)"),
wherein at least two of said ordered groups of symbols ("(.;)","(uv)") input by said multiple-ordered-group key (1003, 1004, 1010, 1011, ..., 1017) comprise at least two symbols,
the apparatus (1000) further comprising an iterator mechanism and a predictive mechanism actuatable in conjunction with said multiple-ordered-group key (1003, 1004, 1010, 1011, ..., 1017) to select members of said ordered groups ("(8)", "(.;)", "(t)","(uv)") for input, and
further comprising at least one auxiliary key (1005, 1006) which is actuatable in conjunction with said at least one multiple-ordered-group key such that when said auxiliary key is actuated in conjunction with said at least one of said multiple-ordered-group key then one of said ordered groups is selected for input.

2. The apparatus of claim 1
wherein at least one of said ordered groups input by said multiple-ordered-group key (1004, 1010, 1011, ..., 1017) is a punctuation group "(.;)"comprising punctuation symbols and another ("(8)", "(t)","(uv)") of said ordered groups input by said multiple-ordered-group key (1004, 1010, 1011, ..., 1017) does not contain punctuation symbols
said auxiliary key is a first auxiliary key (1005) being actuatable in conjunction with at least one of said multiple-ordered-group keys (1004, 1010, 1011, ..., 1017) such that when said first auxiliary key is actuated in conjunction with said multiple-ordered-group key members (1004, 1010, 1011, ..., 1017) of said punctuation group are preferentially selected for input.

3. The apparatus of claim 1 or 2, wherein said multiple-ordered-group key (1003, 1004, 1010, 1011, ..., 1017) is effective to input at least one digit and at least one ordered group, said auxiliary key is a second auxiliary key (1006) being actuatable in conjunction with said at least one multiple-ordered-group key (1003, 1004, 1010, 1011, ..., 1017) such than when said second auxiliary key (1006) is activated in conjunction with said multiple-ordered-group key (1003, 1004, 1010, 1011, ..., 1017) said at least one digit is preferentially selected for input.

4. The apparatus of claim 1 wherein said auxiliary key is a fourth auxiliary key (1007) which is a disambiguation key wherein said at least one multiple-ordered-group keys (1003, 1004, 1010, 1011, ..., 1017) inputs a letter ordered group, said letter ordered group comprising letters, said disambiguation key being actuatable in conjunction with said at least one of said multiple-ordered-group keys (1003, 1004, 1010, 1011, ..., 1017) inputting a letter ordered group such that when said disambiguation key is actuated in conjunction with said at least one multiple-ordered group key (1003, 1004, 1010, 1011, ..., 1017) inputting a letter ordered group then one of said letters in said letter ordered group is preferentially selected for input.

5. The apparatus of claim 3 further comprising a space key for inputting the symbol, and where said multiple-ordered-group key (1003, 1004, 1010, 1011, ..., 1017) is actuatable in conjunction with said space key such that when said multiple-ordered-group key (1003, 1004, 1010, 1011, ..., 1017)is actuated in conjunction with said space key a tab symbol is input.

6. The apparatus of claim 1 further comprising auxiliary keys which is actuatable in conjunction with said at least one multiple-ordered-group keys such that when one of said auxiliary keys is actuated in conjunction with at least one of said multiple-ordered-group keys then one of said ordered groups is selected for input, and where said ordered groups comprise symbols of essential one class, said classes selected from the group consisting of punctuation symbols, digits, and letters and such that each of said auxiliary keys is labelled in a visually distinct way and such that at least one member of said at least one ordered group corresponds to a label on said at least one multiple-ordered group key and where said corresponding label shares the same visually distinction as said auxiliary key which selects said ordered group for input, whereby the association of said auxiliary key and said ordered group is discoverable.

7. The apparatus of claim 1 further comprising a third auxiliary key which is a symbol-advance key being actuatable in conjunction with at least one of said at least one multiple-ordered group keys (1003, 1004, 1010, 1011, ..., 1017) such that when said at least one multiple-ordered-group key (1003, 1004, 1010, 1011, ..., 1017) is actuated in conjunction with said symbol-advance key then a member of at least one of said multiple-ordered groups is selected preferentially for input, and such that when said symbol-advance key is actuated several times in succession, elements of said at least one ordered groups are successively selected for input in a defined order.

8. The apparatus of claim 7 wherein said defined order is defined as a function of sequences of symbols previously input.

9. The apparatus of claim 1 wherein said at least one of said multiple-ordered group keys (1003, 1004, 1010, 1011...., 1017) is labeled with at least one element from each of said ordered groups input by said multiple-ordered-group key (1003, 1004, 1010, 1011, ..., 1017).

10. The apparatus of claim 9 wherein said labels are visually distinct for letters, punctuation symbols and digits, said visual distinction encoded by differences in font size, color, illumination, or typeface of said labels.

11. The apparatus of claim 9 wherein at least one of said multiple-ordered group keys (1003, 1004, 1010, 1011, ..., 1017) inputs at least one punctuation ordered group where said punctuation ordered group contains at least one punctuation symbol and further specified in that at least one of said punctuation symbols in said punctuation ordered group is a commonly occurring punctuation symbol, said commonly occurring punctuation symbol corresponding to at least one of said labels.

12. The apparatus of claim 11 wherein said commonly occurring punctuation symbols are selected from the group consisting of comma, exclamation point, question mark, percent sign, underscore, hyphen, left parenthesis, right parenthesis, colon, at sign star, and pound sign.

13. The apparatus of claim 1 wherein at least one multiple-ordered group keys inputs a punctuation symbol and a digit which are morphically similar to each other.

14. The apparatus of claim 13 wherein one of said multiple-ordered group keys inputs a set of symbols comprising the digit 1 and the punctuation symbol exclamation point.

15. The apparatus of claim 13 wherein one of said multiple-ordered group keys (1004) inputs a set of symbols comprising the digit 2 and the punctuation symbol question mark.

16. The apparatus of claim 13 wherein one of said multiple-ordered group keys (1010) inputs a set of symbols comprising the digit 3 and the punctuation symbol percent sign.

17. The apparatus of claim 13 wherein one of said multiple-ordered group keys (1011) inputs a set of symbols comprising the digit 4 and the punctuation symbol underscore.

18. The apparatus of claim 13 wherein one of said multiple-ordered group keys (1012) inputs a set of symbols comprising the digit 5 and the punctuation symbol hyphen.

19. The apparatus of claim 13 wherein one of said multiple-ordered group keys (1013) inputs a set of symbols comprising the digit 6 and the punctuation symbol left parenthesis.

20. The apparatus of claim 13 wherein one of said multiple-ordered group keys (1014) inputs a set of symbols comprising the digit 7 and the punctuation symbol slash.

21. The apparatus of claim 13 wherein one of said multiple-ordered group keys (1015) inputs a set of symbols comprising the digit 8 and the punctuation symbol colon.

22. The apparatus of claim 13 wherein one of said multiple-ordered group keys (1016) inputs a set of symbols comprising the digit 9 and the punctuation right parenthesis.

23. The apparatus of claim 13 wherein one of said multiple-ordered group keys (1017) inputs a set of symbols comprising the digit 0 and the punctuation symbol at sign

24. The apparatus of claim 13 wherein said morphically similar punctuation symbol and digit are each associated to a label on said at least one multiple-ordered group key where said labels are superimposed.

25. The apparatus of claim 24 further comprising an illumination apparatus effective to preferentially illuminate either said superimposed digit or said superimposed punctuation symbol.

26. The apparatus of claim 1 wherein at least one ordered group input by at least one said multiple-ordered-group key (1017) substantially consists of accented letters.

27. The apparatus of claim 26 wherein said ordered group substantially consisting of accented letters substantially consists of accented vowels.

28. The apparatus of claim 1 further comprising a fifth auxiliary key (1009) effective to capitalize letters which have been previously input, said fifth auxiliary key (1009) associated with an ordered group of capitalization patterns such that when said fifth auxiliary key (1009) is successively actuated members of said ordered group of capitalization patterns are successively applied in order to sequences of said letters which have been previously input.

29. The apparatus of claim 28 wherein said ordered group of capitalization patterns comprises the pattern of capitializing the first letter of a word, or capitalizing all letters of a word or uncapitalizing all letters of a word.

30. The apparatus of claim 1 further comprising a sixth auxiliary key (1002) effective to undo the last retroactive change effected by said predictive software.

31. The apparatus of claim 1 further comprising a space key (1001) for inputting the space symbol, such that one activation of the space key (1001) causes a space symbol to be input and such that two consecutive activations input a character sequence comprising the carriage return symbol, and each consecutive activation inputs an additional character sequence comprising a carriage return symbol.

## Patentansprüche

1. Vorrichtung (1000) für die Eingabe von Symbolen, umfassend eine Mehrzahl von Tasten (1001, 1002, 1003, ...),
wobei mindestens eine der Tasten eine Taste mit mehreren Ordnungsgruppen (1003, 1004, 1010, 1011, ..., 1017) ist, der eine Mehrzahl von Ordnungsgruppen von Symbolen ("(8)", "(.;)", "(t)", "(uv)") zugewiesen ist, wobei die Taste mit mehreren Ordnungsgruppen (1003, 1004, 1010, 1011, ..., 1017) dazu ausgebildet ist, ein ausgewähltes Element einer ausgewählten Gruppe der Mehrzahl von Ordnungsgruppen von Symbolen ("(8)", "(.;)", "(t)", "(uv)") einzugeben,
wobei mindestens zwei der Ordnungsgruppen von Symbolen ("(.;)", "(uv)"), die von der Taste mit mehreren Ordnungsgruppen (1003, 1004, 1010, 1011, ..., 1017) eingegeben wird, mindestens zwei Symbole umfassen,
wobei die Vorrichtung (1000) weiter einen Iteratormechanismus und einen Prädiktivmechanismus umfasst, die in Verbindung mit der Taste mit mehreren Ordnungsgruppen (1003, 1004, 1010, 1011, ..., 1017) betätigbar sind, um Elemente der Ordnungsgruppen ("(8)", "(.;)", "(t)", "(uv)") zur Eingabe auszuwählen, und
weiter umfassend mindestens eine Hilfstaste (1005, 1006), die in Verbindung mit der mindestens einen Taste mit mehreren Ordnungsgruppen derart betätigbar ist, dass, wenn die Hilfstaste in Verbindung mit der mindestens einen Taste mit mehreren Ordnungsgruppen betätigt wird, dann eine der Ordnungsgruppen zur Eingabe ausgewählt wird.

2. Vorrichtung nach Anspruch 1, wobei mindestens eine der Ordnungsgruppen, die von der Taste mit mehreren Ordnungsgruppen (1004, 1010, 1011, ..., 1017) eingegeben wird, eine Interpunktionsgruppe "(.;)" ist, die Interpunktionssymbole umfasst, und eine andere ("(8)", "(t)", "(uv)") der von der Taste mit mehreren Ordnungsgruppen (1004, 1010, 1011, ..., 1017) eingegebenen Ordnungsgruppen keine Interpunktionssymbole umfasst,
wobei die Hilfstaste eine erste Hilfstaste (1005) ist, die in Verbindung mit mindestens einer der Tasten mit mehreren Ordnungsgruppen (1004, 1010, 1011, ..., 1017) derart betätigbar ist, dass, wenn die erste Hilfstaste in Verbindung mit der Taste mit mehreren Ordnungsgruppen (1004, 1010, 1011, ..., 1017) betätigt wird, bevorzugt Elemente der Interpunktionsgruppe zur Eingabe ausgewählt werden.

3. Vorrichtung nach Anspruch 1 oder 2, wobei die Taste mit mehreren Ordnungsgruppen (1003, 1004, 1010, 1011, ..., 1017) dazu ausgebildet ist, mindestens ein Zeichen und mindestens eine Ordnungsgruppe einzugeben, wobei die Hilfstaste eine zweite Hilfstaste (1006) ist, die in Verbindung mit der mindestens einen Taste mit mehreren Ordnungsgruppen (1003, 1004, 1010, 1011, ..., 1017) derart betätigbar ist, dass, wenn die zweite Hilfstaste (1006) in Verbindung mit der Taste mit mehreren Ordnungsgruppen (1003, 1004, 1010, 1011, ..., 1017) betätigt wird, bevorzugt das mindestens eine Zeichen zur Eingabe ausgewählt wird.

4. Vorrichtung nach Anspruch 1, wobei die Hilfstaste eine vierte Hilfstaste (1007) ist, die eine Disambiguierungstaste ist, wobei die mindestens eine Taste mit mehreren Ordnungsgruppen (1003, 1004, 1010, 1011, ..., 1017) eine Buchstabenordnungsgruppe eingibt, wobei die Buchstabenordnungsgruppe Buchstaben umfasst, wobei die Disambiguierungstaste in Verbindung mit der mindestens einen Taste mit mehreren Ordnungsgruppen (1003, 1004, 1010, 1011, ..., 1017), die eine Buchstabenordnungsgruppe eingibt, derart betätigbar ist, dass, wenn die Disambiguierungstaste in Verbindung mit der mindestens einen Taste mit mehreren Ordnungsgruppen (1003, 1004, 1010, 1011, ..., 1017), die eine Buchstabenordnungsgruppe eingibt, betätigt wird, dann bevorzugt einer der Buchstaben der Buchstabenordnungsgruppe zur Eingabe ausgewählt wird.

5. Vorrichtung nach Anspruch 3, weiter umfassend eine Leertaste zum Eingeben des Symbols und wobei die Taste mit mehreren Ordnungsgruppen (1003, 1004, 1010, 1011, ..., 1017) in Verbindung mit der Leertaste derart betätigbar ist, dass, wenn die Taste mit mehreren Ordnungsgruppen (1003, 1004, 1010, 1011, ..., 1017) in Verbindung mit der Leertaste betätigt wird, bevorzugt ein Tabulatorsymbol eingegeben wird.

6. Vorrichtung nach Anspruch 1, weiter umfassend Hilfstasten, die in Verbindung mit der mindestens einen Taste mit mehreren Ordnungsgruppen derart betätigbar ist, dass, wenn eine der Hilfstasten in Verbindung mit mindestens einer der Tasten mit mehreren Ordnungsgruppen betätigt wird, dann eine der Ordnungsgruppen zur Eingabe ausgewählt wird, und wobei die Ordnungsgruppen Symbole von im Wesentlichen einer Klasse umfassen, wobei die Klassen ausgewählt sind aus der Gruppe bestehend aus Interpunktionssymbolen, Ziffern und Buchstaben und derart, dass jede der Hilfstasten in einer sichtbar unterschiedlichen Weise markiert ist, und derart, dass mindestens ein Element der mindestens einen Ordnungsgruppe einer Markierung auf der mindestens einen Taste mit mehreren Ordnungsgruppen zugeordnet ist, und wobei die zugehörige Markierung die gleiche sichtbare Unterscheidung aufweist wie die Hilfstaste, die die Ordnungsgruppe zur Eingabe auswählt, wodurch die Zuordnung der Hilfstaste und der Ordnungsgruppe erkennbar ist.

7. Vorrichtung nach Anspruch 1, weiter umfassend eine dritte Hilfstaste, die eine Symbolvorwärtstaste ist, die in Verbindung mit mindestens einer der mindestens einen Taste mit mehreren Ordnungsgruppen (1003, 1004, 1010, 1011, ..., 1017) derart betätigbar ist, dass, wenn die mindestens eine Taste mit mehreren Ordnungsgruppen (1003, 1004, 1010, 1011, ..., 1017) in Verbindung mit der Symbolvorwärtstaste betätigt wird, dann ein Element mindestens einer der mehreren Ordnungsgruppen bevorzugt zur Eingabe ausgewählt wird, und derart, dass, wenn die Symbolvorwärtstaste mehrmals nacheinander betätigt wird, Elemente der mindestens eine Ordnungsgruppe nacheinander zur Eingabe in einer definierten Abfolge ausgewählt werden.

8. Vorrichtung nach Anspruch 7, wobei die definierte Abfolge als Funktion von zuvor eingegebenen Symbolsequenzen definiert ist.

9. Vorrichtung nach Anspruch 1, wobei die mindestens eine der Tasten mit mehreren Ordnungsgruppen (1003, 1004, 1010, 1011, ..., 1017) mit mindestens einem Element aus jeder der Ordnungsgruppen markiert ist, die von der Taste mit mehreren Ordnungsgruppen (1003, 1004, 1010, 1011, ..., 1017) eingegeben wird.

10. Vorrichtung nach Anspruch 9, wobei die Markierungen für Buchstaben, Interpunktionssymbole und Ziffern sichtbar unterschiedlich sind, wobei die sichtbare Unterscheidung durch Unterschiede in Schriftgröße, Farbe, Ausleuchtung oder Schriftbild der Markierungen kodiert ist.

11. Vorrichtung nach Anspruch 9, wobei mindestens eine der Tasten mit mehreren Ordnungsgruppen (1003, 1004, 1010, 1011, ..., 1017) mindestens eine Interpunktionsordnungsgruppe eingibt, wobei die Interpunktionsordnungsgruppe mindestens ein Interpunktionssymbol enthält, und weiter dadurch spezifiziert, dass mindestens eines der Interpunktionssymbole in der Interpunktionsordnungsgruppe ein häufig vorkommendes Interpunktionssymbol ist, wobei das häufig vorkommende Interpunktionssymbol mindestens einer der Markierungen zugeordnet ist.

12. Vorrichtung nach Anspruch 11, wobei die häufig vorkommenden Interpunktionssymbole ausgewählt sind aus der Gruppe bestehend aus Komma, Ausrufezeichen, Fragezeichen, Prozentzeichen, Unterstrich, Bindestrich, linke Klammer, rechte Klammer, Doppelpunkt, At-Zeichen, Sternchen und Rautetaste.

13. Vorrichtung nach Anspruch 1, wobei mindestens eine der Tasten mit mehreren Ordnungsgruppen ein Interpunktionssymbol und ein Zeichen eingibt, die einander morphisch ähnlich sind.

14. Vorrichtung nach Anspruch 13, wobei eine der Tasten mit mehreren Ordnungsgruppen einen Satz von Symbolen eingibt, der die Ziffer 1 und das Interpunktionssymbol Ausrufezeichen umfasst.

15. Vorrichtung nach Anspruch 13, wobei eine der Tasten mit mehreren Ordnungsgruppen (1004) einen Satz von Symbolen eingibt, der die Ziffer 2 und das Interpunktionssymbol Fragezeichen umfasst.

16. Vorrichtung nach Anspruch 13, wobei eine der Tasten mit mehreren Ordnungsgruppen (1010) einen Satz von Symbolen eingibt, der die Ziffer 3 und das Interpunktionssymbol Prozentzeichen umfasst.

17. Vorrichtung nach Anspruch 13, wobei eine der Tasten mit mehreren Ordnungsgruppen (1011) einen Satz von Symbolen eingibt, der die Ziffer 4 und das Interpunktionssymbol Unterstrich umfasst.

18. Vorrichtung nach Anspruch 13, wobei eine der Tasten mit mehreren Ordnungsgruppen (1012) einen Satz von Symbolen eingibt, der die Ziffer 5 und das Interpunktionssymbol Bindestrich umfasst.

19. Vorrichtung nach Anspruch 13, wobei eine der Tasten mit mehreren Ordnungsgruppen (1013) einen Satz von Symbolen eingibt, der die Ziffer 6 und das Interpunktionssymbol linke Klammer umfasst.

20. Vorrichtung nach Anspruch 13, wobei eine der Tasten mit mehreren Ordnungsgruppen (1014) einen Satz von Symbolen eingibt, der die Ziffer 7 und das Interpunktionssymbol Schrägstrich umfasst.

21. Vorrichtung nach Anspruch 13, wobei eine der Tasten mit mehreren Ordnungsgruppen (1015) einen Satz von Symbolen eingibt, der die Ziffer 8 und das Interpunktionssymbol Doppelpunkt umfasst.

22. Vorrichtung nach Anspruch 13, wobei eine der Tasten mit mehreren Ordnungsgruppen (1016) einen Satz von Symbolen eingibt, der die Ziffer 9 und das Interpunktionssymbol rechte Klammer umfasst.

23. Vorrichtung nach Anspruch 13, wobei eine der Tasten mit mehreren Ordnungsgruppen (1017) einen Satz von Symbolen eingibt, der die Ziffer 0 und das Interpunktionssymbol At-Zeichen umfasst.

24. Vorrichtung nach Anspruch 13, wobei das Interpunktionssymbol und das Zeichen, die morphisch ähnlich sind, jeweils einer Markierung auf der mindestens einen Taste mit mehreren Ordnungsgruppen zugeordnet sind, wobei die Markierungen übereinander gesetzt sind.

25. Vorrichtung nach Anspruch 24, weiter umfassend eine Beleuchtungseinrichtung, die dazu ausgebildet ist, bevorzugt entweder das darüber gesetzte Zeichen oder das darüber gesetzte Interpunktionssymbol zu beleuchten.

26. Vorrichtung nach Anspruch 1, wobei mindestens eine Ordnungsgruppe, die von mindestens einer Taste mit mehreren Ordnungsgruppen (1017) eingegeben wird, im Wesentlichen aus akzentuierten Buchstaben besteht.

27. Vorrichtung nach Anspruch 26, wobei die Ordnungsgruppe, die im Wesentlichen aus akzentuierten Buchstaben besteht, im Wesentlichen aus akzentuierten Vokalen besteht.

28. Vorrichtung nach Anspruch 1, weiter umfassend eine fünfte Hilfstaste (1009), die dazu ausgebildet ist, Buchstaben großzuschreiben, die zuvor eingegeben worden sind, wobei die fünfte Hilfstaste (1009) einer Ordnungsgruppe von Großschriftmustern derart zugeordnet ist, dass, wenn die fünfte Hilfstaste (1009) nacheinander betätigt wird, Elemente der Ordnungsgruppe von Großschriftmustern in der Abfolge von Sequenzen der Buchstaben, die zuvor eingegeben worden sind, nacheinander gesetzt werden.

29. Vorrichtung nach Anspruch 28, wobei die Ordnungsgruppe von Großschriftmustern das Muster für Großschrift des ersten Buchstabens eines Wortes oder Großschrift aller Buchstaben eines Wortes oder Kleinschrift aller Buchstaben eines Wortes umfasst.

30. Vorrichtung nach Anspruch 1, weiter umfassend eine sechste Hilfstaste (1002), die dazu ausgebildet ist, die letzte rückwirkende Veränderung, die durch die prädiktive Software vorgenommen worden ist, rückgängig zu machen.

31. Vorrichtung nach Anspruch 1, weiter umfassend eine Leertaste (1001) zum Eingeben des Leerstellensymbols derart, dass eine Aktivierung der Leertaste (1001) bewirkt, dass ein Leerstellensymbol eingegeben wird, und derart, dass zwei aufeinander folgende Aktivierungen eine Zeichenfolge eingeben, die das Wagenrücklaufsymbol umfasst, und jede der aufeinander folgenden Aktivierungen eine weitere Zeichensequenz eingibt, die ein Wagenrücklaufsymbol umfasst.

## Revendications

1. Appareil (1000) pour l'entrée de symboles comprenant une multiplicité de touches (1001, 1002, 1003,...)
dans lequel au moins l'une desdites touches est une touche pour groupes ordonnés multiples (1003, 1004, 1010, 1011, ..., 1017) à laquelle est affectée une multiplicité de groupes de symboles ordonnés ("(8)", "(.;)", "(t)", "(uv)"), ladite touche pour groupes ordonnés multiples (1003, 1004, 1010, 1011, ..., 1017) permettant l'entrée d'un membre sélectionné d'un groupe sélectionné de ladite multiplicité de groupes ordonnés de symboles ("(8)", "(.;)", "(t)", "(uv)"),
dans lequel au moins deux desdits groupes ordonnés de symboles ("(.;)", "(uv)") fournis en entrée par ladite touche pour groupes ordonnés multiples (1003, 1004, 1010, 1011, ..., 1017) comprennent au moins deux symboles,
l'appareil (1000) comprenant en outre un mécanisme itérateur et un mécanisme prédictif pouvant être activés en association avec ladite touche pour groupes ordonnés multiples (1003, 1004, 1010, 1011, ..., 1017) pour sélectionner des membres desdits groupes ordonnés ("(8)", "(.;)", "(t)", "(uv)") pour l'entrée, et
comprenant en outre au moins une touche auxiliaire (1005, 1006) qui peut être actionnée en association avec ladite au moins une touche pour groupes ordonnés multiples de façon à ce que lorsque ladite touche auxiliaire est actionnée en association avec ladite au moins une desdites touches pour groupes ordonnés multiples, alors l'un desdits groupes ordonnés est sélectionné pour l'entrée.

2. Appareil selon la revendication 1,
dans lequel au moins l'une desdits groupes ordonnés fournis en entrée par ladite touche pour groupes ordonnés multiples (1004, 1010, 1011, ..., 1017) est un groupe de ponctuation "(.;)" comprenant des symboles de ponctuation et un autre ("(8)", "(t)", "(uv)") desdits groupes ordonnés fournis en entrée par ladite touche pour groupes ordonnés multiples (1004, 1010, 1011, ..., 1017) ne contient pas de symboles de ponctuation,
ladite touche auxiliaire est une première touche auxiliaire (1005) qui peut être actionnée en association avec au moins l'une desdites touches pour groupes ordonnés multiples (1004, 1010, 1011, ..., 1017) de façon à ce que lorsque ladite première touche auxiliaire est actionnée en association avec ladite touche pour groupes ordonnés multiples, des membres (1004, 1010, 1011, ..., 1017) dudit groupe de ponctuation sont sélectionnés de manière préférentielle pour l'entrée.

3. Appareil selon la revendication 1 ou 2, dans lequel ladite touche pour groupes ordonnés multiples (1003, 1004, 1010, 1011, ..., 1017) permet l'entrée d'au moins un chiffre et d'au moins un groupe ordonné, ladite touche auxiliaire est une seconde touche auxiliaire (1006) qui peut être actionnée en association avec ladite au moins une touche pour groupes ordonnés multiples (1003, 1004, 1010, 1011, ..., 1017) de façon à ce que lorsque ladite seconde touche auxiliaire (1006) est activée en association avec ladite touche pour groupes ordonnés multiples (1003, 1004, 1010, 1011, ..., 1017), ledit au moins un chiffre soit sélectionné de manière préférentielle pour l'entrée.

4. Appareil selon la revendication 1, dans lequel ladite touche auxiliaire est une quatrième touche auxiliaire (1007) qui est une touche de désambigüisation, dans lequel ladite au moins une touche pour groupes ordonnés multiples (1003, 1004, 1010, 1011, ..., 1017) effectue l'entrée d'un groupe ordonné de lettres, ledit groupe ordonné de lettres comprenant des lettres, ladite touche de désambigüisation pouvant être actionnée en association avec ladite au moins une touche pour groupes ordonnés multiples (1003, 1004, 1010, 1011, ..., 1017) effectuant l'entrée d'un groupe ordonné de lettres de façon à ce que lorsque ladite touche de désambigüisation est actionnée en association avec ladite au moins une touche pour groupes ordonnés multiples (1003, 1004, 1010, 1011, ..., 1017) effectuant l'entrée d'un groupe ordonnées de lettres, alors l'une desdites lettres dudit groupe ordonné de lettres soit sélectionnée de manière préférentielle pour l'entrée.

5. Appareil selon la revendication 3, comprenant en outre une touche d'espace pour l'entrée du symbole et dans lequel ladite touche pour groupes ordonnés multiples (1003, 1004, 1010, 1011, ..., 1017) peut être actionnée en association avec ladite touche d'espace de façon à ce que lorsque ladite touche pour groupes ordonnés multiples (1003, 1004, 1010, 1011, ..., 1017) est actionnée en association avec ladite touche d'espace, un symbole de tabulation soit fourni en entrée.

6. Appareil selon la revendication 1, comprenant en outre des touches auxiliaires qui peuvent être actionnées en association avec ladite au moins une touche pour groupes ordonnés multiples de façon à ce que lorsque l'une desdites touches auxiliaires est actionnée en association avec au moins l'une desdites touches pour groupes ordonnés multiples, alors l'un desdits groupes ordonnés soit sélectionné pour l'entrée, et dans lequel lesdits groupes ordonnés comprennent des symboles essentiellement constitués d'une classe, lesdites classes étant sélectionnées dans le groupe constitué de symboles de ponctuation, de chiffres, et de lettres et de telle façon que chacune des touches auxiliaires soit étiquetée d'une manière visuellement distinctive et de façon à ce qu'au moins un membre dudit au moins un groupe ordonné corresponde à un étiquetage sur ladite au moins une touche pour groupes ordonnés multiples, et dans lequel ladite étiquette correspondante partage la même distinction visuelle que ladite touche auxiliaire qui sélectionne ledit groupe ordonné pour l'entrée, de telle façon que l'association de ladite touche auxiliaire et dudit groupe ordonné puisse être découverte.

7. Appareil selon la revendication 1, comprenant en outre une troisième touche auxiliaire qui est une touche de symbole d'avance pouvant être actionnée en association avec au moins l'une desdites au moins une touches pour groupes ordonnés multiples (1003, 1004, 1010, 1011, ..., 1017) de façon à ce que lorsque ladite au moins une touche pour groupes ordonnés multiples (1003, 1004, 1010, 1011, ..., 1017) est actionnée en association avec ladite touche d'avance de symbole, alors un membre d'au moins l'un desdits groupes ordonnés multiples soit sélectionné de manière préférentielle pour l'entrée, et de façon à ce que lorsque ladite touche d'avance de symbole est actionnée successivement plusieurs fois, les éléments dudit au moins un groupe ordonné soient successivement sélectionnés pour être fournis en entrée dans un ordre défini.

8. Appareil selon la revendication 7, dans lequel ledit ordre défini est défini en fonction de séquences de symboles précédemment fournis en entrée.

9. Appareil selon la revendication 1, dans lequel ladite au moins une touche pour groupes ordonnés multiples (1003, 1004, 1010, 1011, ..., 1017) est étiquetée avec au moins un élément provenant de chacun desdits groupes ordonnés fournis en entrée par ladite touche pour groupes ordonnés multiples (1003, 1004, 1010, 1011, ..., 1017).

10. Appareil selon la revendication 9, dans lequel lesdites étiquettes sont visuellement distinctes pour des lettres, des symboles de ponctuation et des chiffres, ladite distinction visuelle étant codée par des différences de taille des polices, de couleurs, d'éclairement ou de types de caractères desdites étiquettes.

11. Appareil selon la revendication 9, dans lequel au moins l'une desdites touches pour groupes ordonnés multiples (1003, 1004, 1010, 1011, ..., 1017) permet l'entrée d'au moins un groupe ordonné de ponctuation,
dans lequel ledit groupe ordonné de ponctuation contient au moins un symbole de ponctuation et
**caractérisé en outre en ce qu'**au moins l'un desdits symboles de ponctuation dudit groupe ordonné de ponctuation est un symbole de ponctuation apparaissant souvent, ledit symbole de ponctuation apparaissant souvent correspondant à au moins l'une desdites étiquettes.

12. Appareil selon la revendication 11, dans lequel lesdits symboles de ponctuation apparaissant souvent sont sélectionnés dans le groupe constitué de la virgule, du point d'exclamation, du point d'interrogation, du signe pour cent, du caractère de soulignement, du trait d'union, de la parenthèse gauche, de la parenthèse droite, du caractère deux points, du caractère arobase, du caractère astérisque et du symbole dièse.

13. Appareil selon la revendication 1, dans lequel au moins une touche pour groupes ordonnés multiples permet l'entrée d'un symbole de ponctuation et d'un chiffre qui sont morphologiquement semblables l'un à l'autre.

14. Appareil selon la revendication 13, dans lequel l'une desdites touches pour groupes ordonnés multiples permet l'entrée d'un ensemble de symboles comprenant le chiffre 1 et le symbole de ponctuation "point d'exclamation".

15. Appareil selon la revendication 13, dans lequel l'une desdites touches pour groupes ordonnés multiples (1004) permet l'entrée d'un ensemble de symboles comprenant le chiffre 2 et le symbole de ponctuation "point d'interrogation".

16. Appareil selon la revendication 13, dans lequel l'une desdites touches pour groupes ordonnés multiples (1010) permet l'entrée d'un ensemble de symboles comprenant le chiffre 3 et le symbole de ponctuation "signe pour cent".

17. Appareil selon la revendication 13, dans lequel l'une desdites touches pour groupes ordonnés multiples (1011) permet l'entrée d'un ensemble de symboles comprenant le chiffre 4 et le symbole de ponctuation "soulignement".

18. Appareil selon la revendication 13, dans lequel l'une desdites touches pour groupes ordonnés multiples (1012) permet l'entrée d'un ensemble de symboles comprenant le chiffre 5 et le symbole de ponctuation "trait d'union".

19. Appareil selon la revendication 13, dans lequel l'une desdites touches pour groupes ordonnés multiples (1013) permet l'entrée d'un ensemble de symboles comprenant le chiffre 6 et le symbole de ponctuation "parenthèse gauche".

20. Appareil selon la revendication 13, dans lequel l'une desdites touches pour groupes ordonnés multiples (1014) permet l'entrée d'un ensemble de symboles comprenant le chiffre 7 et le symbole de ponctuation "barre oblique".

21. Appareil selon la revendication 13, dans lequel l'une desdites touches pour groupes ordonnés multiples (1015) permet l'entrée d'un ensemble de symboles comprenant le chiffre 8 et le symbole de ponctuation "deux points".

22. Appareil selon la revendication 13, dans lequel l'une desdites touches pour groupes ordonnés multiples (1016) permet l'entrée d'un ensemble de symboles comprenant le chiffre 9 et le symbole de ponctuation "parenthèse droite".

23. Appareil selon la revendication 13, dans lequel l'une desdites touches pour groupes ordonnés multiples (1017) permet l'entrée d'un ensemble de symboles comprenant le chiffre 0 et le symbole de ponctuation "arobase".

24. Appareil selon la revendication 13, dans lequel le symbole de ponctuation et le chiffre morphologiquement semblables sont chacun associés à une étiquette sur ladite au moins une touche pour groupes ordonnés multiples sur laquelle lesdites étiquettes sont superposées.

25. Appareil selon la revendication 24, comprenant en outre un appareil d'éclairement ayant pour effet d'éclairer de manière préférentielle soit ledit chiffre superposé soit ledit symbole de ponctuation superposé.

26. Appareil selon la revendication 1, dans lequel au moins un groupe ordonné fourni en entrée par au moins l'une desdites touches pour groupes ordonnés multiples (1017) est sensiblement constitué de lettres accentuées.

27. Appareil selon la revendication 26, dans lequel ledit groupe ordonné sensiblement constitué de lettres accentuées est sensiblement constitué de voyelles accentuées.

28. Appareil selon la revendication 1, comprenant en outre une cinquième touche auxiliaire (1009) ayant pour effet de mettre en majuscules des lettres qui ont été précédemment fournies en entrée, ladite cinquième touche auxiliaire (1009) étant associée à un groupe ordonné de motifs de mise en majuscules de façon à ce que lorsque ladite cinquième touche auxiliaire (1009) est successivement actionnée, des membres dudit groupe ordonné de motifs de mise en majuscules soient successivement appliqués de manière ordonnée à des séquences desdites lettres qui ont été précédemment fournies en entrée.

29. Appareil selon la revendication 28, dans lequel ledit groupe ordonné de motifs de mise en majuscules comprend le motif de mise en majuscules de la première lettre d'un mot, ou la mise en majuscules de toutes les lettres d'un mot ou la mise en minuscules de toutes les lettres d'un mot.

30. Appareil selon la revendication 1, comprenant en outre un sixième touche auxiliaire (1002) ayant pour effet d'annuler la dernière modification rétroactive effectuée par ledit logiciel prédictif.

31. Appareil selon la revendication 1, comprenant en outre une touche d'espace (1001) permettant l'entrée du symbole "espace" de façon à ce qu'une activation de la touche d'espace (1001) provoque l'entrée d'un symbole "espace" et de façon à ce que deux activations consécutives produisent l'entrée d'une séquence de caractères comprenant le symbole "retour chariot", et que chaque activation consécutive produise l'entrée d'une séquence de caractères supplémentaires comprenant un symbole "retour chariot".
